# EUROPEAN PATENT APPLICATION

(11) **EP 1 198 156 A2**
(43) Date of publication of application: **17.04.2002**
(21) Application number: 01102838.8
(22) Date of filing: 13.02.2001
(51) Int. Cl.: H04Q 11/04, H04L 12/24, H04J 3/16, H04L 29/06, H04Q 7/38

(54) **Access network with alternate controller and line concentrator for handling connection requests (calls) exceeding the maximum line capacity of the network**

(30) Priority: 13.10.2000 JP 2000313404
(71) Applicant: FUJITSU LIMITED, Kawasaki-shi, Kanagawa 211-8588 (JP)
(72) Inventor: Miyagawa, Takeshi, Fujitsu Limited, Kawasaki-shi, Kanagawa 211-8588 (JP); Tamai, Naofumi, Fujitsu Limited, Kawasaki-shi, Kanagawa 211-8588 (JP)
(74) Representative: HOFFMANN - EITLE

(57) **Abstract**

In an access network having a maximum line capacity of connectable subscriber calls prescribed, an alternate controller sets up e.g. an empty active line or standby line as an alternate line when a congestion detector detects that a maximum number of subscriber calls which a subscriber concentrator can receive is exceeded to cause congestion, and an alternate line concentrator concentrates the alternate lines in a central terminal. Also, the alternate controller selects a subscriber call to be connected to the alternate line based on a subscriber priority order management table. Furthermore, when a congestion state occurs at least one of remote terminals, all of the remote terminals make the lines predetermined as the empty lines alternate lines.

## Description

### Background of the Invention

### Field of the Invention

The present invention relates to an access network, and in particular to an access network having a maximum line capacity of connectable subscriber calls prescribed.

Generally, in an access (subscriber system) network which connects a subscriber such as a telephone, a facsimile, and a terminal to a local exchange, a maximum line capacity of connectable subscriber calls has been prescribed based on a capacity of a link (interface) for connecting a plurality of subscriber lines or circuits to the local exchange. For this reason, it is important to efficiently make use of a limited line capacity and to attend to a connection demand from the subscriber.

### Description of the Related Art

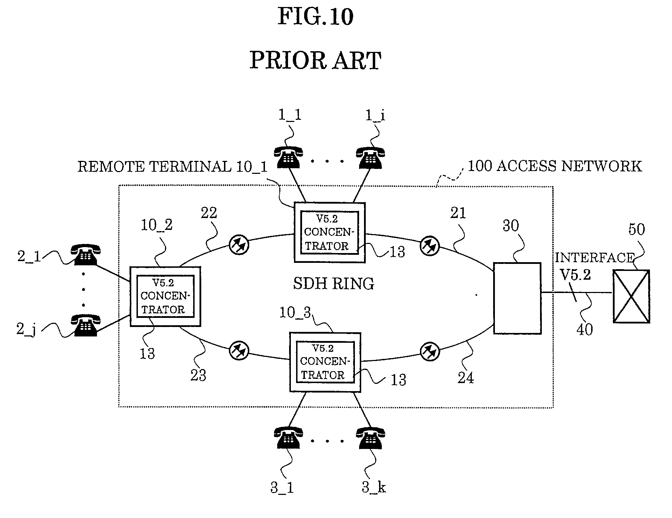

Fig.10 shows an example of a prior art access network, in which an access network 100 is connected to a local exchange 50 with V5.2 protocol (interface) (hereinafter, occasionally abbreviated as V5 protocol).

The access network 100 has an SDH (Synchronous Digital Hierarchy) ring network arrangement in which a central terminal 30 and remote terminals 10_1-10_3 are sequentially connected with optical transmission lines 21-24.

The remote terminals 10_1, 10_2, and 10_3 (hereinafter, sometimes generally represented by reference numeral 10) are respectively equipped with a V5 concentrator 13, and accommodate telephones (hereinafter, referred to as terminals) 1_1-1_i (hereinafter, sometimes generally represented by reference numeral 1), terminals 2_1-2_j (hereinafter, sometimes generally represented by reference numeral 2), and terminals 3_1-3_k.

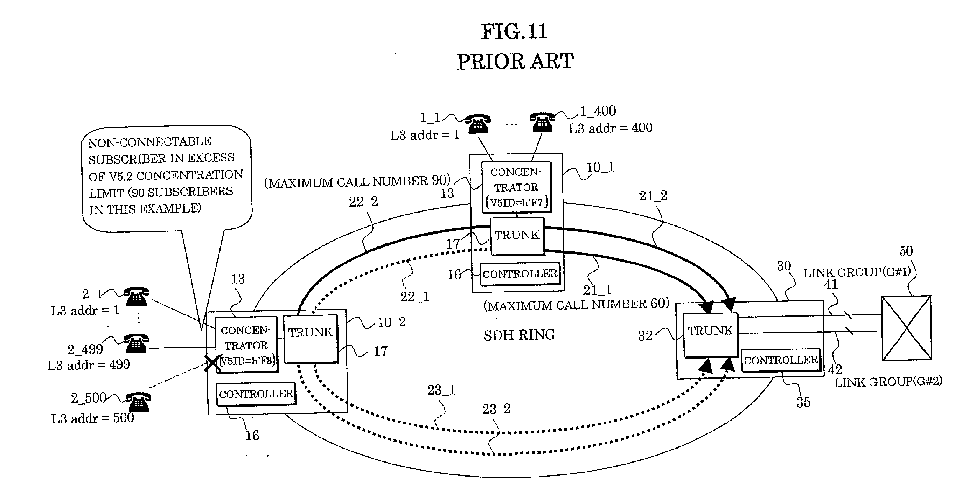

Fig.11 shows a more detailed arrangement of the access network 100 in Fig.10. In this arrangement, the remote terminal 10_3 shown in Fig.10 is omitted for convenience' sake. Each remote terminal 10 is composed of the concentrator 13, a trunk 17 connected to the concentrator 13, and a controller 16. The central terminal 30 is composed of a trunk 32 and a controller 35.

The trunk 32 in the central terminal 30 is connected to the local exchange 50 with link groups 41 and 42. Also, the trunk 32 in the central terminal 30, the trunks 17 in the remote terminals 10_1 and 10_2 are physically connected ringlike to an active optical transmission line which transmits an STM-1 signal counterclockwise and to a standby transmission line which transmits the STM-1 signal clockwise.

Fig.11 shows a connection of these transmission lines at a level of path. Namely, the trunk 17 in the remote terminal 10_1 is connected to the trunk 32 in the central terminal 30 in an active path group 21_1 and a standby path group 22_1 (and path group 23_1 same as the path group 22_1) , and the trunk 17 in the remote terminal 10_2 is connected to the trunk 32 in an active path group 22_2 (and path group 21_2 same as the path group 22_2) and a standby path group 23_2.

The concentrators 13 in the remote terminals 10_1 and 10_2 respectively accommodate 400 terminals 1_1-1_400 and 500 terminals 2_1-2_500.

Also, addresses of layer 3 (L3 adrr) ="1"-"400" are respectively allocated to the terminals 1_1-1_400, and addresses of layer 3 (L3 adrr) ="1"-"500" are respectively allocated to the terminals 2_1-2_500. Furthermore, V5 interface identifiers (V5ID)= "h'F7" and "h'F8" are respectively assigned to the concentrators 13 in the remote terminals 10_1 and 10_2.

The terminal 1 accommodated in the remote terminal 10_1 is connected to the local exchange 50 through the concentrator 13, the trunk 17, the active path 21_1, the trunk 32, and the link group 41. Similarly, the terminal 2 accommodated in the remote terminal 10_2 is connected to the local exchange 50 through the concentrator 13, the trunk 17, the active paths 22_2 and 21_2, the trunk 32, and the link group 42.

In case that a fault occurs on the active path 21_1 at present, the terminal 1 is connected to the local exchange 50 through the concentrator 13, the trunk 17, the standby paths 22_1 and 23_1, the trunk 32, and the link group 41. Similarly, in case that a fault occurs on the active path 22_2 or 21_2, the terminal 2 is connected to the local exchange 50 through the concentrator 13, the trunk 17, the standby path 23_2, the trunk 32, and the link group 42.

The central terminal 30 and the local exchange 50 are connected with the V5.2 interface, and maximum 16 links of 2 Mbps (=64 k×32 channels) are established therebetween to enable a concentration. In this example, two or three links are respectively allocated to the remote terminals 10_1 and 10_2, and these link groups are assumed to be the link groups 41 (2 Mbps×2) and 42 (2 Mbps×3) in Fig.11.

Accordingly, the transmission capacity of the active path 21_1 and the standby paths 22_1 and 23_1 is 2 Mbps×2, and that of the active paths 21_2 and 22_2 and the standby path 23_2 is 2 Mbps×3. It is to be noted that a maximum number of calls which a single link (2 Mbps) can concentrate is assumed to be e.g. a bearer channel number E1=30 within 2 Mbps (=64 k×32 channels (TS's: time slots)).

Accordingly, the maximum number of subscribers (terminals) which the concentrator 13 in the remote terminal 10_1 can connect is "60 (=E1×2)" under the limit of a V5 concentration, and the maximum number of subscribers (terminals) which the concentrator 13 in the remote terminal 10_2 can connect is "90 (=E1×3)".

Namely, in the remote terminal 10_1, the maximum number of terminals which can be synchronously connected is "60" in the 400 accommodated terminals 1, and in the remote terminal 10_2, the maximum number of terminals which can be synchronously connected is "90" in the 500 accommodated terminals 2.

In such a prior art access network, when a call connection demand of the 91st call over the maximum number of connectable terminals "90" occurs, the remote terminal 10_2, for example, has rejected the demand (see mark × in Fig.11).

Generally, the call number in commercial buildings or the like increases in a limited time zone from morning till evening, and extremely decreases in a time zone after the evening. When the prior art access network is applied to such a commercial building, transmission lines corresponding to the maximum number of calls have to be prepared in spite of a large change in the number of calls depending on the time zone, resulting in a bad working efficiency or availability.

### Summary of the Invention

It is accordingly an object of the present invention to provide an access network having a maximum line capacity of connectable subscriber calls prescribed, and capable of attending to a connection demand of a subscriber call in excess of the maximum line capacity.

In order to achieve the above-mentioned object, an access network of the present invention according to claim 1 comprises : a remote terminal including a subscriber concentrator having a maximum number of connectable subscriber calls prescribed, a congestion detector for detecting whether or not the subscriber calls received by the subscriber concentrator exceed the maximum number causing congestion, and an alternate controller for setting up an empty line as an alternate line when the congestion detector detects the congestion state, and a central terminal including an alternate line concentrator for concentrating the alternate line.

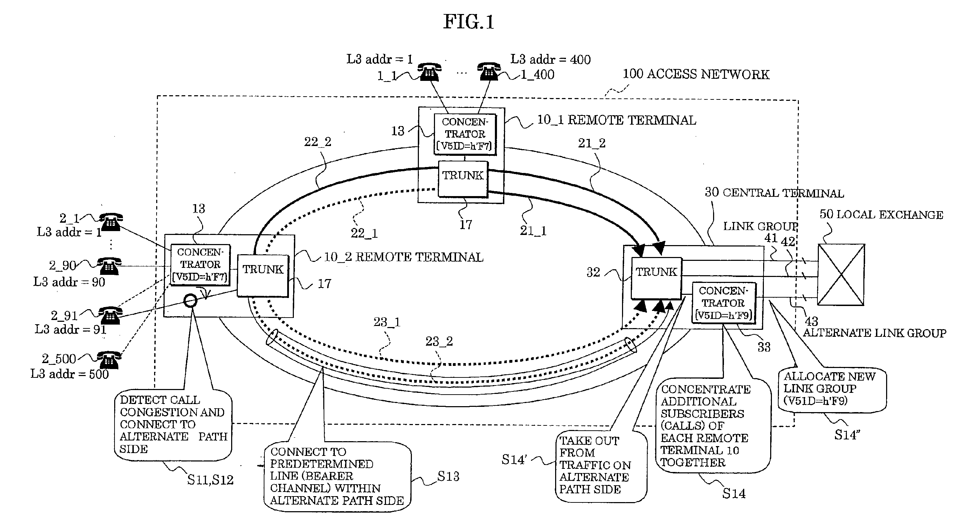

Fig.1 shows a principle of an access network according to the present invention. In a remote terminal 10_2 in Fig.1, the controller 16 shown in Fig.11 is omitted for convenience' sake.

In the remote terminal 10_2, a subscriber concentrator 13 prescribes or defines e.g. "90" for the maximum number of connectable calls. When the subscriber concentrator 13 connects calls of subscribers (hereinafter referred to also as terminals) 2_1-2_90, for example, and when a congestion state occurs due to a further connection demand of a terminal 2_91, a congestion detector (not shown) detects the congestion state.

An alternate controller (not shown) which has received the notification of the congestion state from the congestion detector sets up an alternate line through e.g. an empty standby path 23_2, and connects the call of e.g. the above-mentioned terminal 2_91 with the alternate line (see mark in Fig.1). In the central terminal 30, an alternate line concentrator 33 takes out the alternate line from the path 23_2 to be concentrated.

Thus, it becomes possible for the remote terminal 10_2 to connect calls exceeding the maximum number of connectable calls "90" by making e.g. a standby line an alternate line. In turn, it becomes possible to raise a working efficiency of a transmission line. It is to be noted that not only a standby line but also an empty line unused in the access network can be used for an alternate line.

Also, in the present invention according to claim 2, when detecting that a predetermined number of calls can not be received within a predetermined time, the congestion detector may determine the congestion state.

Namely, the congestion detector detects the state in which the number of calls which the subscriber concentrator has been unable to receive for a predetermined time e.g. 20 minutes exceeds 10 as the congestion state, and notifies the alternate controller of the congestion state. The alternate controller sets up an alternate line to perform a call connection.

Also, in the present invention according to claim 3, the alternate line concentrator in the central terminal may be connected to a local exchange with a link of a predetermined line capacity, and the alternate controller may notify the local exchange of the congestion state whereby the local exchange may use a predetermined alternate link which connects the local exchange and the alternate line concentrator.

Namely, the alternate controller of the remote terminal 10 notifies the local exchange 50 of the congestion state. The local exchange 50 recognizes the notification and uses a predetermined empty link between the local exchange and the alternate line concentrator.

Thus, it becomes possible to simultaneously establish an alternate line and an alternate link between the remote terminal 10_2 and the local exchange 50.

Also, in the present invention according to claim 4, the alternate controller may have a subscriber priority order management table for indicating a priority order of a subscriber call connected to the alternate line.

Namely, according to an importance degree of a subscriber, a subscriber using an alternate line is preset in a management table. Namely, a less important subscriber is predetermined to be preferentially passed to the alternate line. When the congestion state occurs, the alternate controller selects the subscriber call to be switched over to the alternate line based on the priority order of the management table to be connected to the alternate line.

Thus, it becomes possible for a more important subscriber to reliably perform a communication without the switchover operation to the alternate line.

Also, in the present invention according to claim 5, when at least one of the remote terminals is in the congestion state, all of the remote terminals may make a line predetermined as the empty line an alternate line.

Namely, when at least one of the remote terminals 10_1 and 10_2, e.g. the remote terminal 10_1 in Fig.1 assumes a congestion state, all of the remote terminals 10 (including the remote terminal 10_2 which is not in congestion state) connect the subscriber calls which the management table designates to the alternate line.

Generally, a time zone when the congestion state occurs is almost the same in the remote terminals. When a single remote terminal becomes a congestion state, there is a high possibility that other remote terminals are close to the congestion state.

Therefore, if all of the remote terminals are simultaneously connected to the alternate line when a congestion state in a signal remote terminal is detected, a control operation in the remote terminals and the central terminal becomes easier compared with the case where each remote terminal is connected to an alternate line.

The same applies to the case where the calls connected to the alternate lines of all the remote terminals are returned to the active lines, when all of the remote terminals are not in the congestion state.

Also, in the present invention according to claims 6 and 7, when there is an empty active line or an empty standby line, the alternate controller may set up the empty line as the alternate line. Thus, it becomes possible to raise the working efficiency of the transmission line.

Also, in the present invention according to claim 8, the alternate controller of the remote terminal 10 notifies the alternate line concentrator 33 in the central terminal 30 of the congestion state. At the same time, the alternate controller and the alternate line concentrator 33 may use the alternate line predetermined as the empty line.

Thus, it becomes possible to immediately establish the alternate line between the subscriber concentrator in the remote terminal and the alternate line concentrator 33.

Furthermore, in the present invention according to claim 9, the alternate line concentrator may have a management table indicating a correspondence between the subscriber calls and a link which concentrates the calls, and the subscriber calls from the alternate lines may be concentrated to a single or a plurality of predetermined links based on the management table.

Thus, the concentration operation of the alternate line concentrator becomes easier to be dealt with compared with the case where the link which connects the subscriber call is not determined, and it becomes possible to specify the link to which the subscriber call is connected, resulting in an easier maintenance management.

### Brief Description of the Drawings

Fig.1 is a block diagram showing a principle of an access network according to the present invention;
Fig.2 is a block diagram showing an embodiment (1) of an access network according to the present invention;
Fig.3 is a diagram showing a more detailed connection state of a path and an alternate line in an embodiment (1) of an access network according to the present invention;
Fig.4 is a flow chart showing an example of an operation procedure in an access network according to the present invention;
Fig.5 is a block diagram showing an embodiment of a remote terminal in an access network according to the present invention;
Fig . 6 is a sequence diagram showing an operation procedure of an alternate line switchover in an access network according to the present invention;
Fig.7 is a diagram showing an example of a subscriber priority order management table used in an access network according to the present invention;
Fig.8 is a block diagram showing an embodiment (2) of an access network according to the present invention;
Fig. 9 is a diagram showing a more detailed connection state of a path and an alternate line in an embodiment (2) of an access network according to the present invention;
Fig.10 is a block diagram showing an arrangement of a prior art access network; and
Fig.11 is a block diagram showing a more detailed arrangement of a prior art access network.

Throughout the figures, like reference numerals indicate like or corresponding components.

### Description of the Embodiments

### Embodiment (1)

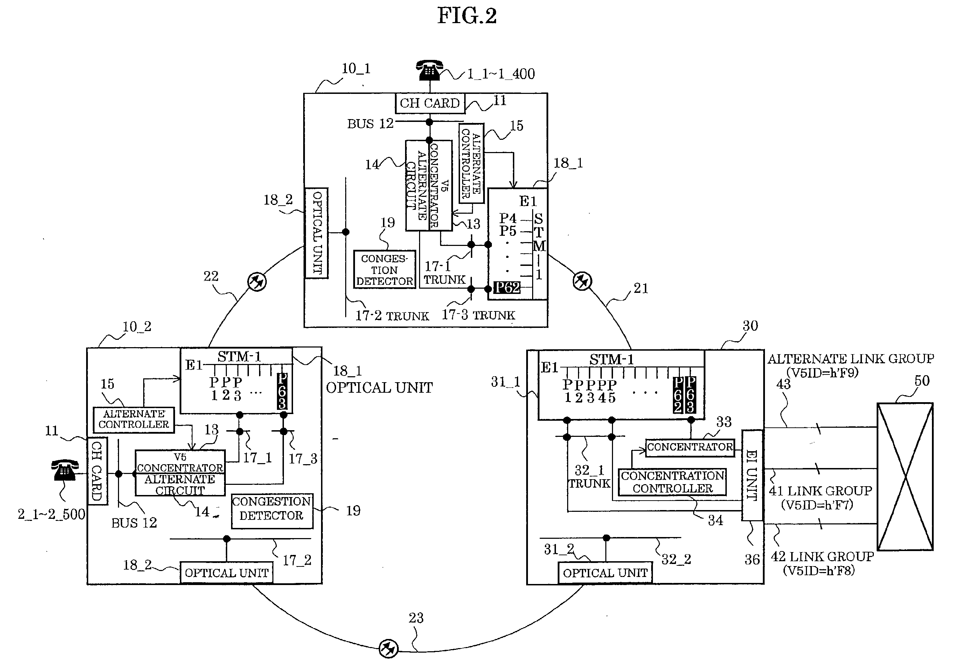

An embodiment (1) of an access network 100 according to the present invention schematically shown in Fig.1 will now be described referring to Fig.2. While the basic arrangement of the network is the same as that of the prior art ring access network shown in Fig.11, the access network of the present invention can be applied to a connection form not only of a ring type network, but also a star type network or the like.

Also, the access network of the present invention is different from the prior art access network in the internal arrangements of the remote terminal 10 and the central terminal 30.

The remote terminal 10_1 includes a channel (CH) card 11 accommodating terminals 1_1-1_400, an alternate circuit 14 and a V5 concentrator 13 commonly connected to the card 11 with a bus 12, an optical unit 18_1 connected to the alternate circuit 14 and the V5 concentrator 13 with a trunk 17_1, and a congestion detector 19 which detects the congestion state of the concentrator 13 to be notified to an alternate controller 15.

It is to be noted that the alternate controller 15 controls the alternate circuit 14 for setting up an alternate line when a congestion state occurs, the V5 concentrator 13, and the optical unit 18_1.

Furthermore, the remote terminal 10_1 is equipped with a trunk 17_2 and an optical unit 18_2 for using a part of an optical transmission line 22 as a standby line.

The arrangement of the remote terminal 10_2 is the same as that of the remote terminal 10_1.

The central terminal 30 includes an optical unit 31_1 for accommodating a transmission line 21, an E1 unit 36 connected to the optical unit 31_1 with a trunk 32_1, an alternate line concentrator 33 which concentrates alternate lines from the optical unit 31_1 to be connected to the E1 unit 36, and a concentration controller 34 for controlling the concentrator 33. Furthermore, the central terminal 30 is equipped with an optical unit 31_2 for accommodating a standby transmission line 23 and a trunk 32_2 connected to the optical unit 31_2.

The local exchange 50 is connected to the central terminal 30 with the link groups 41 and 42 accommodated in the E1 unit 36, and the alternate link group 43.

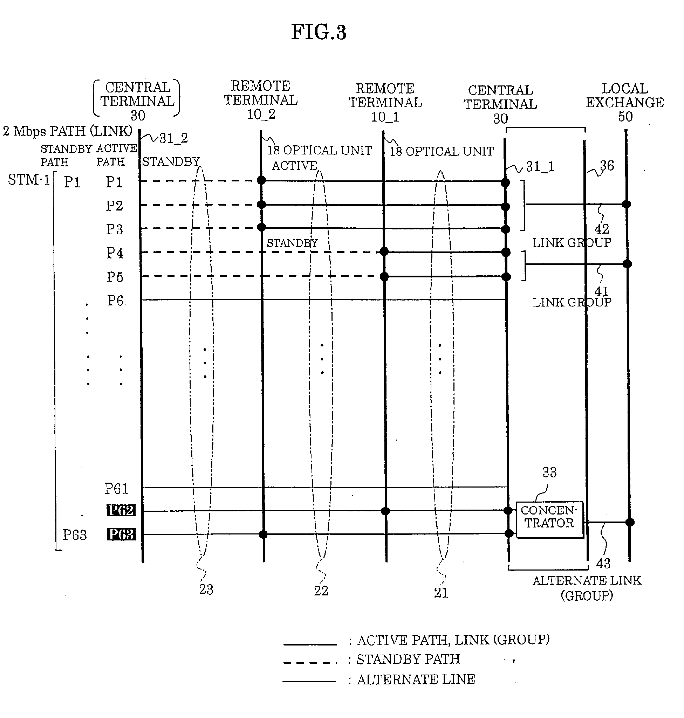

Fig.3 shows a connection state of the optical units 18_1 and 18_2 (generally represented by reference numeral 18 in Fig.3) in the remote terminals 10_1 and 10_2, the optical units 31_1 and 31_2 in the central terminal 30, and the transmission lines 21-23 composed of standby transmission lines and active transmission lines.

It is to be noted that the path of the active transmission line is shown by a solid line and the path of the standby transmission line is shown by a dashed line in Fig.3. Also, the same reference numeral is used for the paths of both active and standby transmission lines. Moreover, the same central terminal 30 is shown at 2 portions in Fig.3 for convenience' sake.

The transmission lines 21-23 mutually connects the optical units 18_1, 18_2, and 31_1 with STM-1 (Synchronous Transport Module-1) interface of 155.52 Mbps which is the basic transmission rate. In this embodiment (1), 7 active paths P1-P5, P62, and P63 of 2 Mbps paths (line bundle) included in the STM-1 interface are used. The alternate lines are set up along the paths P62 and P63 of those 7 paths.

It has been already described in Fig.11 that 30 lines included in the 2 Mbps paths are used for a concentration line (bearer channel) of subscriber calls.

The optical unit 18_1 in the remote terminal 10_1 is connected to the optical unit 31_1 in the central terminal 30 through the paths P4 and P5 (solid line parts) of the active transmission line 21, while the optical unit 18_2 is connected to the optical unit 31_2 through the paths P4 and P5 (dashed line parts) of the transmission lines 22 and 23.

Similarly, the optical unit 18_1 in the remote terminal 10_2 is connected to the optical unit 31_1 through the paths P1-P3 (solid line parts) of the active transmission lines 21 and 22, while the optical unit 18_2 is connected to the optical unit 31_2 through the paths P1-P3 (dashed line parts) of the standby transmission line 23.

The alternate controller 15 in the remote terminal 10_1 connects the subscriber call to the central terminal 30 by using the line included in the active path P62 as an alternate line. The concentrator 33 in the central terminal 30 is connected to the local exchange 50 with the alternate link 43 which concentrates the alternate lines. The subscriber call of the remote terminal 10_2 is similarly connected to the local exchange 50 through the alternate line included in the active path P63, the concentrator 33, and the alternate link 43.

In Fig.2, the V5 concentrator 13 in the remote terminal 10_1 can select the subscriber calls from 60 terminals among the terminals 1_1-1_400 through the card 11 and the bus 12, and can connect the selected subscriber call to the optical unit 18_1 through the trunk 17_1.

This connected subscriber call is connected to the central terminal 30 through the active paths P4 and P5 (each 30 lines, and 60 lines in total).

Similarly, the V5 concentrator 13 in the remote terminal 10_2 selects the subscriber calls from 90 terminals among the terminals 2_1-2_500, and connects the selected subscriber call to the optical unit 18_1, so that this connected subscriber call is connected to the central terminal 30 through the active paths P1-P3 (each 30 lines, and 90 lines in total).

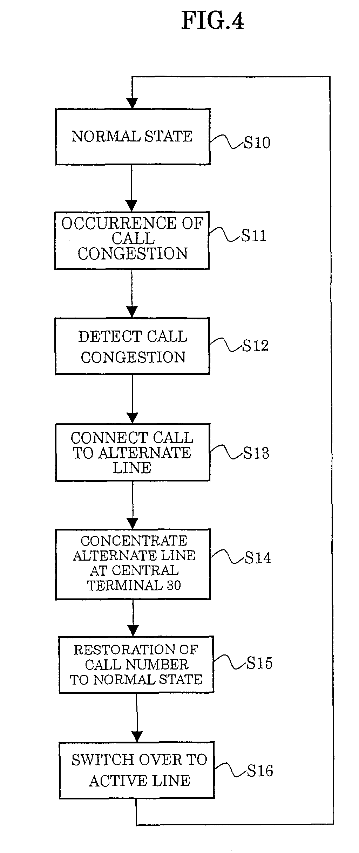

Fig.4 shows an example of an operation procedure of the access network 100 of the present invention shown in Fig.2. Hereinafter, the operation procedure will be described.
Step S10: In a normal state without congestion, the remote terminals 10_1 and 10_2 respectively concentrate the calls from the terminals equal to or less than the maximum number of calls to be connected to the central terminal 30 through the active paths P4, P5 and P1-P3.
Steps S11-S12: When connection demands more than the maximum number of calls occur in e.g. the remote terminal 10_2, the congestion detector 19 detects this congestion state to be notified to the alternate controller 15 (see Fig.1).
Step S13: The alternate controller 15 in the remote terminal 10_2 instructs the alternate circuit 14 to setup alternate lines. The alternate circuit 14 sets up predetermined lines (bearer channel) included in the empty paths P62 and P63 as alternate lines between the central terminal 30 and the concentrator 33, and connects the call which has just been received (or a special call described later) to the concentrator 33 through the alternate lines.
Step S14: The concentrator 33 in the central terminal 30 concentrates the alternate lines from the remote terminal 10 per 30 lines in the 2 Mbps alternate link (group) 43 to be connected to the local exchange 50.
Steps S15 and S16: When detecting that the total number of the calls connected to the active lines and the alternate lines becomes less than the maximum number of calls whereby the congestion state is canceled, the congestion detector 19 notifies the alternate controller 15 of the fact. The alternate controller 15 instructs the alternate circuit 14 to switch over the calls connected to the alternate lines to the active lines of the V5 concentrator 13.

In the absence of the alternate line call from all of the remote terminals 10, the concentrator 33 in the central terminal 30 releases the alternate link 43 between the central terminal 30 and the local exchange 50.

This means that the state has been restored to the normal state without congestion of step S10.

It is to be noted that each remote terminal 10 independently connects the call to the alternate line in the above-mentioned operation procedure. However, if the alternate lines are simultaneously connected to all of the remote terminals 10 when the congestion state is detected in at least one of the remote terminals 10, the control operations in the remote terminals 10, the central terminal 30, and the local exchange 50 become easy.

Similarly, by controlling the calls connected to the alternate lines in all of the remote terminals 10 to be restored to the active lines when all of the remote terminals 10 are not in the congestion state, the control operations become easy.

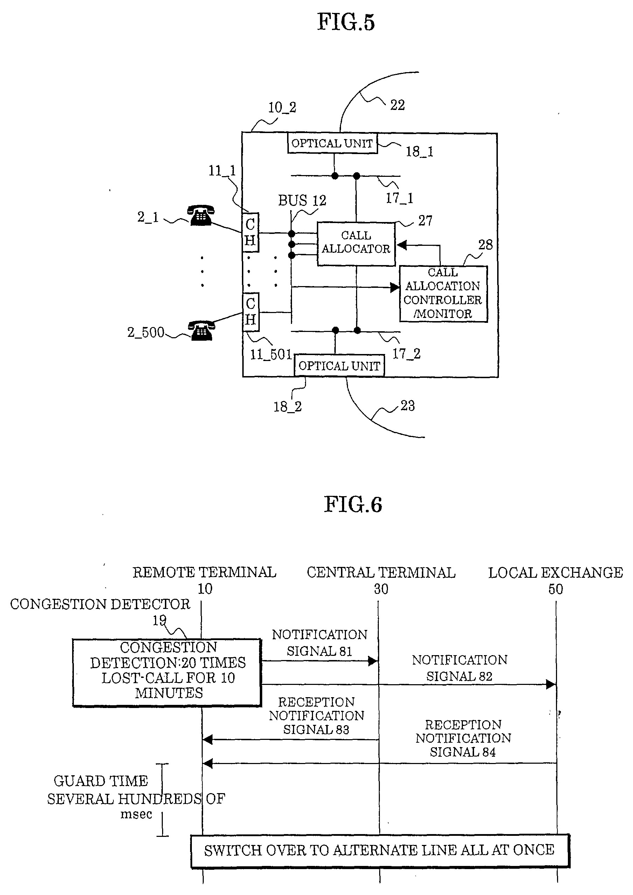

The operation for detecting the congestion state and the setup operation of the alternate lines at steps S12 and S13 will now be described referring to Fig.5.

The functions of the V5 concentrator 13, the alternate circuit 14, the alternate controller 15, and the congestion detector 19 in the remote terminal 10 shown in Fig.2 can be respectively realized by a call allocation function, a call allocation control function, and a monitoring function. In the remote terminal 10 of Fig.5, the V5 concentrator 13 and the alternate circuit 14 compose a call allocator 27, and the allocation controller 15 and the congestion detector 19 compose a call allocation controller/monitor 28 for convenience' sake.

The call allocation controller/monitor 28 (congestion detector 19 therein) monitors the number of calls connected to the active lines and a call connection demand from the terminal. When receiving the call connection demand in a range not exceeding the maximum number of connectable calls, the call allocation controller/monitor 28 instructs the call allocator 27 to allocate the calls to the active lines. When receiving the call connection demand exceeding the maximum number of calls, the call allocation controller/monitor 28 sets up alternate lines and instructs the call allocator 27 to connect the calls through the alternate lines.

The following Table 1 shows a threshold value example of a congested call detection by which the call allocation controller/monitor 28 determines the congestion state. There are three types 1-3 of congestion determination in this example as shown in Table 1 below, and it is possible to properly set any type.

In case that the type 1 is set, for example, the call allocation controller/monitor 28 determines it to be the congestion state when the call connection demand exceeding the maximum number of calls occurs more than "20 times" for 10 minutes guard time.

**Table 1**

| Type | Guard time (min) | Congestion call number (times) |
|---|---|---|
| 1 | 10 | 20 |
| 2 | 20 | 50 |
| 3 | 30 | 100 |

Fig.6 is a sequence diagram showing a setup operation of an alternate line at the time of detecting the congestion state.

When detecting the congestion state in the type 1 shown in Table 1, the congestion detector 19 in the remote terminal 10 shown in Fig.2 sends notification signals 81 and 82 respectively indicating that the congestion state has occurred to the central terminal 30 and the local exchange 50 directly or through the alternate controller 15.

The central terminal 30 and the local exchange 50 respectively receive the notification signals 81 and 82 to return reception notification signals 83 and 84.

The remote terminal 10, the central terminal 30, and the local exchange 50 set up the alternate line (alternate link) after several hundreds of milliseconds guard time all at once to connect the call.

For call connection, there are a method (1) in which all of the calls which occur after the congestion state are connected to the alternate lines, and a method (2) in which the priority order of the subscribers connected to the alternate lines is determined, and the subscriber with the higher priority order (subscriber already connected to active line or subscriber who has newly demanded call connection) is switched over or connected to the alternate line when the congestion state occurs.

Hereinafter, the method (2) will be described.

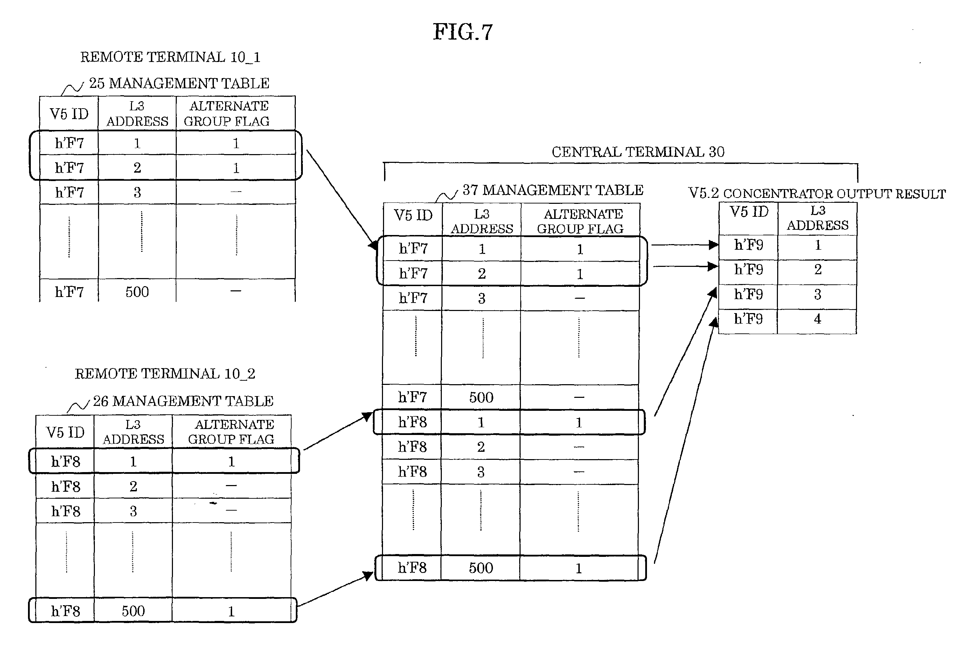

Fig.7 shows subscriber priority order management tables 25, 26, and 37 respectively held by the alternate controller 15 in the remote terminal 10_1, the alternate controller 15 in the remote terminal 10_2, and the concentrator 33 in the central terminal 30.

These management tables 25, 26, and 37 are composed of "concentrator identifier V5ID", "L3 address" of each terminal (subscriber) , and "alternate group flag" indicating whether or not the corresponding terminal should be connected to the alternate line.

For example, "h'F7" which is the identifier V5ID of the concentrator 13 in the remote terminal 10_1 is set in "identifier V5ID" of the management table 25 (see Fig.1), and "1" is set in "alternate group flag" corresponding to the subscribers with "L3 address" = "1" and "2" who are preferentially connected to the alternate lines. Accordingly, the subscriber in which "alternate group flag" is not set can reliably perform a communication without being switched over to the alternate line.

Also, the subscriber whose "flag" is set to "1" is registered at the upper part of the management table 25 in the order of the priority for connection to the alternate line. Namely, the subscriber with L3 address = "1" has priority to the subscriber with L3 address = "2" at the time of connecting to the alternate line. Accordingly, in case that there is only a single alternate line and the subscribers with L3 address = "1" and "2" simultaneously demand the connection, the subscriber with L3 address = "1" is preferentially connected to the alternate line.

In addition, the management table 37 prepares the management table 25 and adds the management table 26, thereby designating the terminals connected to the alternate lines concentrated to the concentrator 33 and the priority order of the terminals. L3 addresses are newly and sequentially added to the lines of the alternate link concentrated by the concentrator 33.

It is to be noted that the management table 37 shown in Fig.7 shows the case where the alternate lines (subscriber calls) concentrated from the remote terminals 10 are concentrated to a single link. However, when there are many alternate lines to be concentrated and they are required to be concentrated to a plurality of links (link group), the correspondence between each alternate line (identifier V5ID and L3 address) and the alternate link identifier which concentrates alternate lines can be indicated by adding, for example, the field of the alternate link identifier V5ID to the management table 37.

The alternate controller 15 in the remote terminal 10_1, for example, notifies the central terminal 30 and the local exchange 50 of the congestion state when it occurs. When receiving the reply signal, the alternate controller 15 controls the concentrator 13 and the alternate circuit 14 so as to remove the subscriber connected to the alternate line from the V5 concentrator 13 and to switch it over to the alternate line side, by referring to the management table 25, after a predetermined time (guard time) has elapsed.

After receiving the congestion state notification from the remote terminal 10_1, the concentrator 33 in the central terminal 30 sets up the predetermined alternate link group 43 by referring to the management table 37 after a predetermined time has elapsed, and then concentrates the alternate lines from the remote terminals 10 to be connected to the local exchange 50 through the alternate link group 43.

### Embodiment (2)

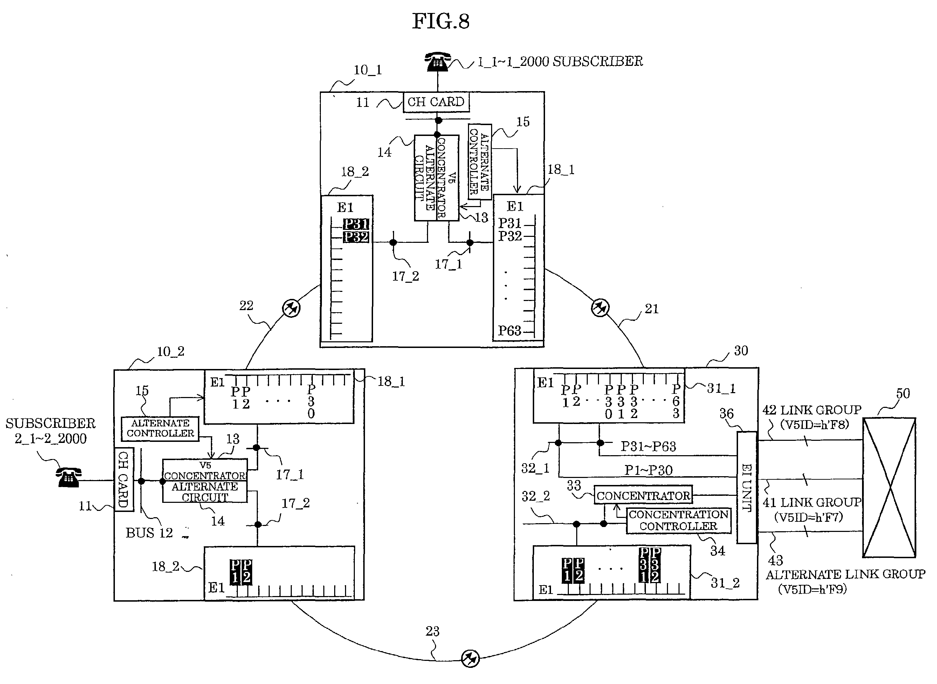

Fig.8 shows an embodiment (2) of an access network 100 of the present invention. In the above-mentioned embodiment (1), the case has been described where when there is an empty active path an alternate line is set up along the empty active path. In this embodiment (2), the operation example will be described in which when there is no empty active path an alternate line is set up along a standby path.

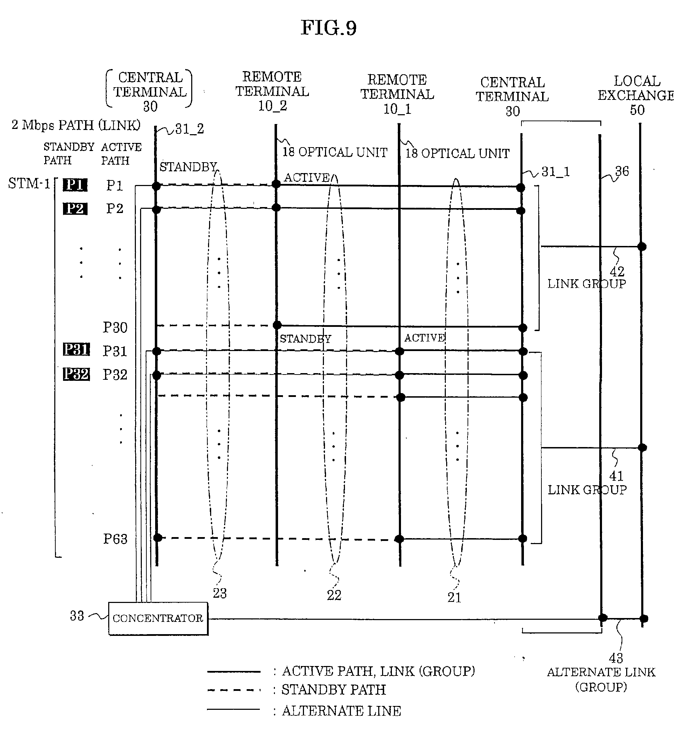

Fig.9 shows a connection state of the optical unit 18 in each remote terminal 10, the optical units 31_1 and 31_2 in the central terminal 30, and the transmission lines 21-23 in the same way as Fig.3.

This connection state is different from the connection state of Fig.3 in that all of the active paths P1 P64 (only solid line parts) are used, and there is no empty path. Namely, the remote terminals 10_1 and 10_2 respectively use the active paths P1-P30 and P31-P63 (solid line parts), and there is no empty path.

In this case, lines included in standby paths P1 and P2 (only dashed line parts) are predetermined as alternate lines between the remote terminal 10_1 and the central terminal 30, and lines included in standby paths P31 and P32 (only dashed line parts) are predetermined as alternate lines between the remote terminal 10_2 and the central terminal 30.

When a congestion occurs, in the same way as the embodiment (1), the call of a predetermined subscriber (terminal) is connected to the central terminal 30 through the alternate line, so that the concentrator 33 in the central terminal 30 concentrates the alternate lines from the remote terminals to the alternate link group 43 to be connected to the local exchange 50.

This will be described in more detail by referring to Figs . 8 and 9.

In Fig.8, the remote terminal 10_1 accommodates 2000 terminals 1_1-1_ 2000. 30 active paths P1-P30 (shown by solid lines in Fig. 9) are prepared for the V5 concentrator 13. Namely, simultaneous calls of 900 (=30 paths×30 lines) terminals can be performed.

Similarly, the remote terminal 10_2 accommodates 2000 terminals 2_1-2_2000, and the active paths P31-P63 (shown by solid lines in Fig.9) are prepared, so that simultaneous calls of 990 (33 paths×30 lines) terminals can be performed.

Also, assuming that a fault occurs in the active paths P1-P30 and P31-P63, standby paths P1-P30 and P31-P63 (shown by dashed lines in Fig.9) reverse in direction to the active paths are set up along the remote terminals 10_1 and 10_2.

Since there is no empty active path in the remote terminals 10_1 and 10_2, the lines included in the standby paths P1 and P2 as well as P31 and P32 generally unused are set up as the alternate lines when the congestion state occurs.

In the central terminal 30, the concentrator 33 concentrates the alternate lines from the standby paths P1, P2, P31, and P32 to be connected to the local exchange as the alternate link group 43.

Thus, in the same way as the embodiment (1), the embodiment (2) can attend to the connection demand of the subscriber call exceeding the maximum number of calls.

It is to be noted that in the embodiments (1) and (2) the case where the interface between the central terminal 30 and the local exchange 50 is prescribed by the V5.2 interface is dealt with, while the present invention can be applied to the access network composed of the remote terminal and the central terminal having a concentration function.

As described above, an access network according to the present invention is arranged such that when a congestion detector detects that a maximum number of subscriber calls which a subscriber concentrator can receive is exceeded to cause congestion, an alternate controller in a remote terminal sets up e.g. an empty active line or standby line as an alternate line, and an alternate line concentrator in a central terminal concentrates the alternate lines. Therefore, it is possible to attend to a connection demand of subscriber calls in excess of the maximum line capacity of the subscriber concentrator.

Also, the alternate controller is arranged so as to select a subscriber call to be connected to the alternate line based on a subscriber priority order management table. Therefore, it becomes possible for a more important subscriber to reliably perform a communication through an active line without being connected to an alternate line. Namely it becomes possible to efficiently use a transmission line according to the importance degree and to suppress the cost of the transmission line.

Furthermore, when a congestion state occurs in at least one of the remote terminals, all of the remote terminals are arranged so as to make the line predetermined as the empty line an alternate line. Therefore, it becomes possible to efficiently use the transmission line according to a change of a call amount for a time zone, so that the control operation becomes easy.

## Claims

1. An access network comprising:
a remote terminal including a subscriber concentrator having a maximum number of connectable subscriber calls prescribed, a congestion detector for detecting whether or not the subscriber calls received by the subscriber concentrator exceed the maximum number causing congestion, and an alternate controller for setting up an empty line as an alternate line when the congestion detector detects the congestion state, and
a central terminal including an alternate line concentrator for concentrating the alternate line.

2. The access network as claimed in claim 1 wherein when detecting that a predetermined number of calls cannot be received within a predetermined time, the congestion detector determines the congestion state.

3. The access network as claimed inclaim 1 wherein the alternate line concentrator in the central terminal is connected to a local exchange with a link of a predetermined line capacity, and the alternate controller notifies the local exchange of the congestion state whereby the local exchange uses a predetermined alternate link which connects the local exchange and the alternate line concentrator.

4. The access network as claimed in claim 1 wherein the alternate controller has a subscriber priority order management table for indicating a priority order of a subscriber call connected to the alternate line.

5. The access network as claimed in claim 4 wherein when at least one of the remote terminals is in the congestion state, all of the remote terminals make a line predetermined as the empty line an alternate line.

6. The access network as claimed in claim 1 wherein the empty line comprises an empty active line.

7. The access network as claimed in claim 1 wherein the empty line comprises an empty standby line.

8. The access network as claimed in claim 1 wherein the alternate controller notifies the alternate line concentrator of the congestion state, and uses a predetermined alternate line as the empty line.

9. The access network as claimed in claim 3 wherein the alternate line concentrator has a management table for indicating a correspondence between subscriber calls from alternate lines and a link which concentrates the subscriber calls.
